(19) Europäisches Patentamt / European Patent Office / Office européen des brevets

(11) **EP 3 862 245 B1**

(12) **EUROPEAN PATENT SPECIFICATION**

(45) Date of publication and mention of the grant of the patent:
**07.06.2023 Bulletin 2023/23**

(21) Application number: **21154464.8**

(22) Date of filing: **29.01.2021**

(51) International Patent Classification (IPC):
**B61F 5/44** *(2006.01)*

(52) Cooperative Patent Classification (CPC):
**B61F 5/44; Y02T 10/72**

(54) **A METHOD, APPARATUS, COMPUTER PROGRAM AND SYSTEM FOR CONTROLLING A WHEEL OF A RAIL MOUNTED AXLE**

VERFAHREN, VORRICHTUNG, COMPUTERPROGRAMM UND SYSTEM ZUR STEUERUNG EINES RADES EINER SCHIENENMONTIERTEN ACHSE

PROCÉDÉ, APPAREIL, PROGRAMME INFORMATIQUE ET SYSTÈME DE COMMANDE D'UNE ROUE D'UN ESSIEU MONTÉ SUR RAILS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2020 GB 202001753**

(43) Date of publication of application:
**11.08.2021 Bulletin 2021/32**

(73) Proprietor: **Stored Energy Technology Limited**
**Derby, Derbyshire DE24 8AQ (GB)**

(72) Inventors:
- **Whitley, Martin**
  **Derby, Derbyshire DE24 8AQ (GB)**
- **Hawley, Justin**
  **Derby, Derbyshire DE24 8AQ (GB)**

(74) Representative: **Swindell & Pearson Limited**
**48 Friar Gate**
**Derby DE1 1GY (GB)**

(56) References cited:
**JP-A- H0 234 465**    **JP-A- H08 268 277**
**JP-A- 2000 309 270**    **JP-A- 2002 234 439**
**KR-A- 20180 021 350**

## Description

TECHNOLOGICAL FIELD

Examples of the present disclosure relate to methods, apparatuses, computer programs and systems for controlling a wheel of a rail mounted vehicle. Some examples, though without prejudice to the foregoing, relate to methods, apparatuses, computer programs and systems for controlling independently rotatable and motored wheels of a wheelset of a rail mounted vehicle.

BACKGROUND

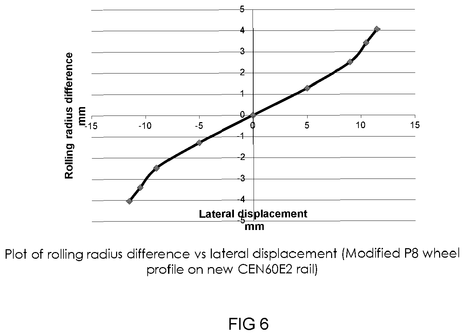

For rail mounted vehicles, guidance and an element of steering may be achieved by means of wheelsets comprising wheels, each having a profiled tyre (e.g. a coned profile), fixed on an axle. Railways use many different wheel tyre profiles and run on rails with many different rail head profiles. As a wheelset/wheel pair shifts laterally on the rails, a rolling radius difference is established between the two wheels which usually increases as the lateral displacement increases (as illustrated in FIG. 6 which plots the relationship between lateral displacement and rolling radius difference for wheels fitted with a P8 [worn type] profile modified to slightly reduce the flange thickness running on CEN60E2 unworn rails). This is the mechanism which permits a wheelsets/wheel pair on a rigid axle to create forces which tend to guide and steer a rail vehicle. As wheels and rails wear, the relationship between lateral displacement and rolling radius difference may deteriorate, leading to unstable running and the need to reprofile wheel tyres and regrind or replace rails.

The use of a rigid axle/very torsionally stiff axle, which forces both wheels to rotate at the same rate, may have potentially serious consequences at the point of contact/contact patch between each wheel and the rail. If there is a rolling radius difference between the two wheels on tangent track, one wheel is prevented from rolling a greater or lesser distance than its partner wheel and high longitudinal forces are created at the contact patch of each wheel. This can cause creep, forced slip, wear and eventually rolling contact fatigue to both the wheels and the rails. Moreover, it may also dissipate energy.

On curved track, where the outer wheel must cover a greater distance than the inner wheel, a lateral displacement of a coned tyre wheelset will create a rolling radius difference. This difference will accommodate some curvature but only up to a limit where the outer wheel's flange touches the gauge corner. This may create noise as well as wear on both the wheel and rail. It may also lead to gauge corner cracking and, in the extreme, derailment.

Independently rotating wheels of a wheelset/wheel pair, where each wheel of the wheel pair/wheelset are not mechanically linked together so as to force both wheels to rotate at the same rate, have been used in light rail vehicles and some heavy rail vehicles, mainly to enable low floors. Independent wheels on stub axles have been linked by arrangements of gearboxes and driveshafts either longitudinally or transversally in a bogie. These arrangements permit low floor arrangements and may restore some of the steering functions of a wheel pair on a rigid axle. However, the radius limit on curved track remains and there is a tendency for continuous flange contact even on tangent track.

Conventional systems for controlling wheels of a rail mounted vehicle are not always optimal. It is useful to provide a method with improved control of a wheel of a rail mounted vehicle.

JP2002234439(A) discloses a system that seeks to provide both of smooth passage on a curved line and stable travel on a linear line by controlling the number of wheel revolutions of left and right wheels. In the system, a driving force generated by a motor is divided between left and right independent rotational wheels and by means of a torque limiter. Between the torque limiter and the left and right independent rotation wheels, decelerators are arranged. The left and right wheels are provided with left and right braking devices individually. Information about a track for traveling the bogie is detected by means of track sensor. By means of signals from the track sensors, a controller controls braking forces by the left and right braking devices independently according to the shape of the track.

JP2000309270(A) discloses a system that seeks to prevent turning angles of a single axle of a single axle independent wheel truck from exceeding a safe angle relative to a car body and enhance safety. In the system, a truck frame of a single axle independent wheel truck is provided with a pair of wheels independently driven by separate motors. A turning angle detection sensor detects turning angles of the truck relative to a car body. When the detected angles are about to exceed a safe angle defined for each running point, a control unit transmits regulatory signals to actuators and the actuators regulate the turning (turning toward an increasing turning angle) of the truck frame. By this arrangement, the turning angles of the truck frame remain within the safe angle, the possibility of derailment is eliminated, and safe running is assured.

JPH08268277(A) discloses a system that seeks to dispense with a mobile mechanism for steering by performing the operation of torque to be generated by both symmetrical motors according to a difference in the rotational frequency of symmetrical wheels detected, and controlling these motors so as to make force, to be produced on each wheel circumference, be generated on the wheel circumference. In the system, a truck is provided with two sensors to measure each rotational frequency of both symmetrical wheels, taking each measuring information into a control unit, and thereby a difference in these rotational frequencies of both the wheels, taking each measuring information into a control unit, and thereby a difference in these rotational frequencies of both the wheels is operated. A torque difference control current being equivalent to a difference in torque imparting each of electric motors multi playing the specifies gain to this rotational speed difference, and individually rotation of the wheels is operated as well. In addition, for example, during travel on a left facing curve road in the traveling direction, the torque difference current is added to a driving current to be outputted from a master controller and each torque of these electric motors is controlled so as to increase the torque of the motor on the right, and to decrease the torque of the motor on the left, respectively.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

BRIEF SUMMARY

The scope of protection sought for various embodiments of the invention is set out by the independent claims.

According to various, but not necessarily all, examples of the disclosure there is provided a method for controlling a wheel of a rail mounted vehicle, the method comprising causing, at least in part, actions that result in:

    determining at least one value of an angular velocity, about a first axis, of a first wheel of a wheelset of a rail mounted vehicle, wherein the wheelset comprises the first wheel and a second wheel, and wherein the first wheel is rotatable and motored independently of the second wheel;

    determining at least one value of a yawing velocity of the wheelset about a second axis perpendicular to the first axis;

    calculating at least one value of a modified angular velocity of the first wheel based, at least in part, on:

        the at least one value of the angular velocity of the first wheel, and

        the at least one value of the yawing velocity of the wheelset;

    controlling an application of torque to the first wheel based, at least in part, on the at least one value of the modified angular velocity of the first wheel.

According to at least some examples of the disclosure there is provided an apparatus comprising means configured to cause the performance of the above method.

According to various, but not necessarily all, examples of the disclosure there is provided a chipset, module, device or control system configured to perform the above method.

According to various, but not necessarily all, examples of the disclosure there is provided a computer program comprising instructions which, when the program is executed by a computer, cause the computer to carry out the above method.

According to various, but not necessarily all, examples of the disclosure there is provided an apparatus comprising at least one processor; and at least one memory including computer program instructions; the at least one memory and the computer program instructions configured to, with the at least one processor, cause the apparatus at least to perform the above method.

According to various, but not necessarily all, examples of the disclosure there is provided a non-transitory computer readable medium encoded with instructions that, when performed by at least one processor, causes at least the above method to be performed.

According to various, but not necessarily all, examples of the disclosure there are provided examples as claimed in the appended claims.

BRIEF DESCRIPTION OF THE DRAWINGS

For a better understanding of various examples of the present disclosure that are useful for understanding the detailed description and certain examples of the present disclosure, reference will now be made by way of example only to the accompanying drawings in which:

    FIG. 1 schematically illustrates an example of the subject matter of the present disclosure;

    FIG. 2A schematically illustrates an example of a method according to the present disclosure;

    FIG. 2B schematically illustrates a further example of a method according to the present disclosure;

    FIG. 3 schematically illustrates a further example of the subject matter of the present disclosure;

    FIG. 4 schematically illustrates an example of an apparatus according to the present disclosure;

    FIG. 5 schematically illustrates an example of a control system according to the present disclosure; and

    FIG. 6 illustrates a relationship between lateral displacement of a wheelset with respect to a section of track and a difference in the rolling radius of the wheels of the wheelset.

The figures are not necessarily to scale. Certain features and views of the figures may be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

The figures schematically illustrate a method 200 for controlling a wheel 101 of a rail mounted vehicle 102, the method comprising:

causing, at least in part, actions that result in determining 201 at least one value of an angular velocity $\omega 1R$, about a first axis 103, of a first wheel 101 of a wheelset 104 of a rail mounted vehicle 102, wherein the wheelset 104 comprises the first wheel 101 and a second wheel 105, and wherein the first wheel 101 is rotatable and motored independently of the second wheel 105;

determining 202 at least one value of a yawing velocity $\dot{\psi}_1$ of the wheelset 104 about a second axis 106 perpendicular to the first axis 103 and to a longitudinal axis 114 of the rail mounted vehicle 102;

calculating 203 at least one value of a modified angular velocity $\varpi 1R$ of the first wheel 101 based, at least in part, on:

the at least one value of the angular velocity $\omega 1R$ of the first wheel 101, and

the at least one value of the yawing velocity $\dot{\psi}_1$ of the wheelset 104;

controlling 204 an application of torque to the first wheel 101 based, at least in part, on the at least one value of the modified angular velocity $\varpi 1R$ of the first wheel 101.

For the purposes of illustration and not limitation, in various, but not necessarily all examples, modified angular velocities are calculated for each wheel of a wheelset of a rail mounted vehicle, i.e. bogie or carbody, wherein each wheel of the wheelset is independently rotatable and independently motored. Each of such modified angular velocities accommodates/adjusts/corrects measured wheel speeds/angular velocities of the wheel for the effect of a yawing velocity of the wheelset (which the wheel is a part of, and which yawing velocity of the wheelset thereby gives rise to a yawing velocity of each respective wheel) when the wheelset is undergoing a yawing motion, e.g. yawing with respect to a frame of reference of the ground. Rather than using directly measured "raw" values of angular velocities, instead modified angular velocities are used in the calculation of the amount of torque to be independently applied to each of the independently rotatable and independently motored/driven wheels. For example, a signal for controlling an application of torque to the first wheel is based, at least in part, on the modified angular velocity of the first wheel. Likewise, a signal for controlling an application of torque to the second wheel is based, at least in part, on the modified angular velocity of the second wheel. The control of the application of torque to each of the first and/or second wheels may be configured so as to provide differing amounts of torque to each wheel such that a differential torque is thereby applied that yaws the axle, i.e. in order to accommodate/adjust/correct for the effect of a yawing velocity of each respective wheel when the wheelset is undergoing a yawing motion.

The inventors have appreciated that, when using independently motored wheels on tangent track, if a control system can be arranged so that both wheels of a wheel pair are running at the same rolling radius, then, provided the relationship between lateral displacement and rolling radius difference is monotonic, the wheel pair will be running centrally on the track. For any given longitudinal speed along tangent track and with non-yawing axles, the angular velocities of the two wheels of a wheel pair/wheelset are inversely proportional to the rolling radii. Hence, controlling to equalise angular velocities for the two wheels will also centralise the wheelset on the track. Differences in relative angular velocity may be corrected by means of yawing the axle to create a lateral movement in such a direction as to vary the relative rolling radii and thus eliminate the difference between angular velocities. However, an axle which is yawing with respect to the track will change the angular velocities of the wheels on that axle for as long as the yawing action remains. Such a yawing action would thus interfere with the above control method. If a convention is adopted that the direction of rotation of a wheel is established by observing the wheel from outside the vehicle frame looking towards the wheel along axis 103, then, for a rail vehicle travelling on a track, if one wheel of a non-yawing wheelset is rotating in a positive direction, the wheel at the other side of the axle will be rotating in a negative direction If the axle is then yawing with a positive (anticlockwise viewed from above) yaw velocity, this will cause a negative (clockwise) change to the rotation rate of both left and right wheels. Various, but not necessarily all, examples of the present disclosure seek to provide a control system that excludes/accommodates/corrects for the effect of a yawing axle on measured wheel angular velocities before equalising the corrected wheel angular velocities.

Without limiting the scope of the claims, a technical advantage/technical effect of various, but not necessarily all, examples of the present disclosure can be to provide improved determination of a wheel's angular velocity and using the same in the control of the wheel, i.e. in the application of torque to be applied to the wheel. Advantageously, such improved control of the wheel may reduce/ameliorate one or more of: creep, forced slip, wear and eventually rolling contact fatigue to both the wheels and the rails. Examples may also reduce: energy losses in overcoming rolling resistance, creepage, noise and wear on both the wheel and rail, as well as possibly gauge corner cracking and reduce the risk of derailment.

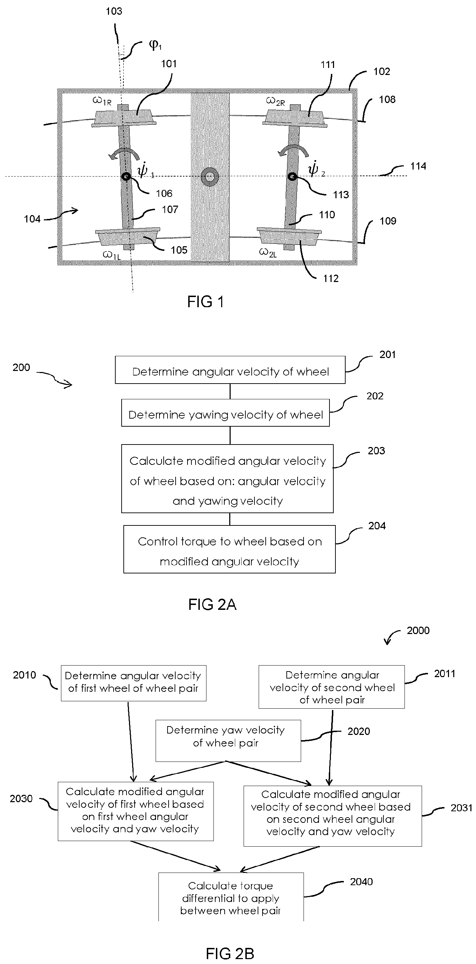

FIG. 1 schematically illustrates an example of a first wheel 101 of a wheelset 104 of a rail mounted vehicle 102. The wheelset comprises the first wheel 104 and a second wheel 105. The first and second wheels are mounted to an axle 107 that defines an axle axis 103 about which the first and second wheels rotate, i.e. when the rail mounted vehicle moves along the first and second sections of rail 108, 109.

The first and second wheels are mounted to the rail mounted vehicle and configured such that, they are able to rotate about a first axis 103, namely the axle axis.

The first wheel is also configured such that it rotates independently of the second wheel. The first wheel is motored/driven independently of the second wheel, i.e. first wheel has its own means for applying a torque thereto e.g. motor (not shown) that drives the rotation of the first wheel independently of the second wheel. Likewise, the second wheel has its means for applying a torque thereto e.g. its own motor (not shown) that drives the rotation of the second wheel independently of the first wheel.

The wheelset is mounted to the rail mounted vehicle and configured such that it is able to move relative to the rail mounted vehicle, i.e. undergo a yawing rotational movement relative to the longitudinal axis 114 of the rail mounted vehicle. Such a yawing movement may correspond to a rotation about a second axis 106 (which, for example, may generally be a substantially vertical axis - coming out of the page of FIG. 1) that is perpendicular to the first (horizontal) axis 103 passing through the centre of the axle, and that is also perpendicular to the longitudinal axis 114 of the rail mounted vehicle. The wheelset may comprise an assembly comprising the first and second independently rotating wheels and a separating structure which is able to yaw, about the second axis at its centre, with reference to the ground.

The first and second wheels may have a particular wheel tyre profile, e.g. coned tyres.

In the example of FIG. 1, the rail mounted vehicle is a steering bogie moving from right to left in the diagram. It will be appreciated that, examples of the present disclosure are applicable to other types of rail mounted vehicles, e.g. not least a carbody. The steering bogie is fitted with two non-rotating axles 107, 110 and four independently motored direct drive rail wheels 101, 105, 111, 112 (which could, for example could be Stored Energy Technology Limited's PMSM "Wheelmotors", resilient or monobloc rail wheels which incorporate direct drive integral permanent magnet synchronous motors). The rotors of the motors are freely rotating on the axles and feature a rapid torque response and virtually zero backlash. The axles are pivotable vertically about their centres 106, 113, such pivoting giving rise to a respective yaw angle $\psi_1$, $\psi_2$ for the first and second axles with respect to a frame of reference of the ground (or other inertial reference frame which itself has negligible angular velocity with respect to the ground around a vertical axis). The yaw angle orientation of each axle in the bogie is as a result of applying differential torque between the pairs of motors on each axle. In most applications there may be some non-zero axle yaw stiffness and the maximum yaw may be determined by the minimum radius of curvature the rail mounted vehicle is designed to encounter. The motors in the wheels may be fitted with absolute position encoders or use some other means of establishing rotor position (which may be used to determine an angular velocity of the wheel) to enable motor control and to feed individual wheel speeds to the control system.

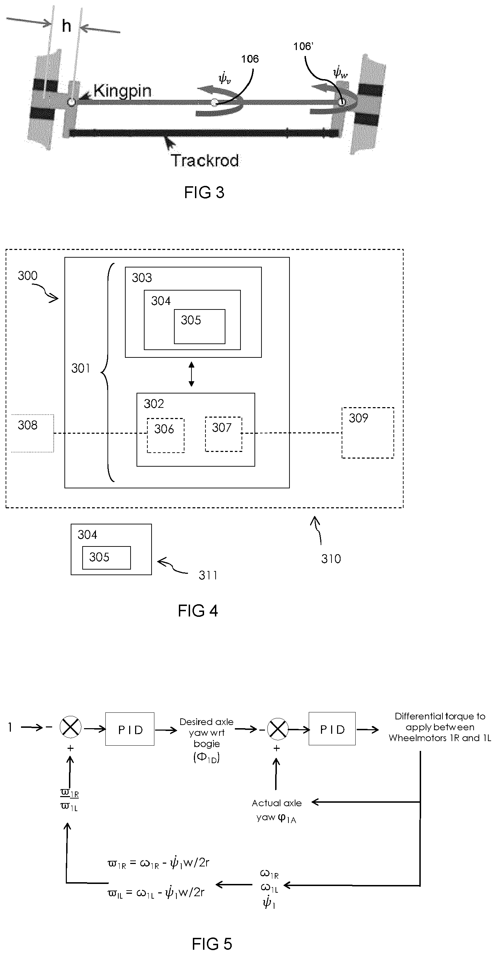

Means for measuring a yawing velocity, e.g. a gyroscopic sensor (not shown), may be fitted to each axle which detects, measures and reports axle yaw velocities $\dot{\psi}_1$ and $\dot{\psi}_2$ about respective vertical axes for the first and second axles to a control apparatus (e.g. as shown in FIG. 4). Means for measuring a yaw angle, e.g. a yaw sensor (not shown), may be fitted to the bogie to measure a yaw angle ($\Phi$) of the bogie, namely the angle between the bogie frame/longitudinal axis of the bogie and the axle.

Various, but not necessarily all, examples of the present disclosure can take the form of a method, an apparatus or a computer program. Accordingly, various, but not necessarily all, examples can be implemented in hardware, software or a combination of hardware and software.

Various, but not necessarily all, examples of the present disclosure are described below using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational steps/actions to be performed by the processor(s) to produce a computer implemented process such that the instructions which execute on the processor(s) provide steps for implementing the functions specified in the block or blocks. Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

FIG. 2A schematically illustrates a flow chart of a method 200 according to an example of the present disclosure. The component blocks of FIG. 2A are functional and the functions described may or may not be performed by a single apparatus/physical entity (such as is described with reference to the apparatus of FIG. 4).

In block 201, a determination is made as to at least one value of an angular velocity of a first wheel, the first wheel being one of a pair of wheels of a wheelset of a rail mounted vehicle, wherein the first wheel is rotatable and motored independently of the other/second wheel of the pair of wheels of the wheelset. As shown with respect to FIG. 1, the at least one determined angular velocity is an angular velocity $\omega 1R$ of the wheel about a first axis 103, such a first axis corresponding the horizontal axis of the axle 107 on which the first wheel 101 and a second wheel 105 are mounted. The at least one value of an angular velocity may comprise a plurality or a series of angular velocity measurements over time that may be detected by means for measuring an angular velocity, e.g. one or more sensors (not shown in FIG.1). In some examples, the angular velocity may be continuously measured and detected.

In block 202, a determination is made as to at least one value of a yaw velocity/yawing velocity, about a second axis perpendicular to the first axis, of the wheelset (which may comprise a yaw velocity/yawing velocity of the: wheel pair, the axle, or each individual wheel) with respect to an inertial frame of reference of the ground (or other inertial reference frame which itself has negligible angular velocity with respect to the ground around a vertical axis). As shown with respect to FIG. 1, the at least one determined yawing velocity is a yawing velocity $\dot{\psi}_1$ of the wheelset about a second axis 106, such a second axis corresponding a vertical axis (perpendicular to the first/horizontal axle axis 103) which passes through the centre of the axle/wheelset. The at least one value of a yawing velocity may comprise a plurality or a series of yawing velocity measurements over time that may be detected by means for measuring a yawing velocity, e.g. one or more sensors (not shown in FIG.1). In some examples, the yawing velocity may be continuously measured and detected. In some examples, the determined value(s) of the yawing velocity of the wheelset comprises a rate of change of a yawing angle of the wheelset with respect to a frame of reference of the ground, (i.e. if a yawing velocity of the wheelset with respect to the rail mounted vehicle is measured, a yawing velocity of the rail mounted vehicle with respect to the ground is added to the measured yawing velocity of the wheelset with respect to the rail mounted vehicle so as to determine a yawing velocity with respect to an inertial frame of reference of the ground).

In block 203, a calculation is made as to at least one value of a modified angular velocity $\varpi 1R$ of the first wheel based, at least in part, on:

the at least one value of the angular velocity $\omega 1R$ of the first wheel and

the at least one value of the yawing velocity $\dot{\psi}_1$ of the wheelset.

The calculation of block 203 may comprise determining an adjustment of the at least one value of the angular velocity of the first wheel based on the at least one value of the yawing velocity of the wheelset of which the first wheel is a part, i.e. so as to correct measured wheel angular velocity so as to accommodate for/exclude the effect of the wheelset undergoing a yawing action due to its axle undergoing a yawing action.

An axle (and hence the wheels mounted to the axle), which is undergoing a yawing action, i.e. having a non-zero yawing velocity $\dot{\psi}_1$ with respect to the track, will change the angular velocities of the wheels on that axle $\omega 1R$ and $\omega 1L$ for as long as the yawing action remains. The change in wheel angular velocity $\delta\omega$ is given by:

$$\delta\omega = -\dot{\psi}w/2r$$

where:

w = distance between contact patches on the rails of a wheel pair
$\dot{\psi}$ = yaw velocity
r = wheel radius (in some examples, the small error of variations in rolling radius may be ignored)

The change in wheel angular velocity $\delta\omega$, as calculated above must be subtracted from the first wheel's angular velocity before being used in block 204's control of the application of torque to the first wheel. Likewise, the change in wheel angular velocity $\delta\omega$ must be subtracted from the second wheel's angular velocity before being used in the control of the application of torque to the second wheel.

Thus, the corrected wheel angular velocity for the first wheel is given by:

$$\varpi_{1R} = \omega_{1R} - \dot{\psi}_1 w/2r$$

The corrected wheel angular velocity for the second wheel is given by:

$$\varpi_{1L} = \omega_{1L} - \dot{\psi}_1 w/2r$$

(it being appreciated that the angular velocity $\omega_{1L}$ of the second wheel would have an opposite direction and sign convention to that of $\omega_{1R}$)

Analogous calculations can be made for the other wheels 111, 112 of the other axle 110.

By way of example, if one were to consider the bogie 102 of FIG.1 moving from right to left at around 13kph, then, using the sign convention that viewing each wheel looking towards that side of the bogie, the left-hand wheel 105 (in the direction of travel) will be rotating in a positive direction (i.e. anticlockwise), [for example $\omega_{1L}$ = +10 radians/second] and the right-hand wheel 101, looking towards but from the other side of the bogie, in a negative direction [for example $\omega_{1R}$ = -10 radians/second]. If one were to introduce a positively yawing axle at a rate $\dot{\psi}_1$ = +1 radian/second, and for simplicity making w/2r equal to 2, then the corrected values will become

$$\varpi_{1L} = +8$$ radians/second for the left-hand wheel 105

and $\varpi_{1R} = -12$ for wheel the right-hand wheel 101.

In block 204, an application of torque to the first wheel 101 is controlled based, at least in part, on the at least one value of the modified angular velocity $\varpi 1R$ of the first wheel 101.

The flowchart of FIG. 2A represents one possible scenario among others. The order of the blocks shown is not absolutely required. In certain examples one or more blocks can be performed in a different order or overlapping in time, in series or in parallel.

The above described method blocks 201 - 204 could be repeated for the second wheel 105 of the wheel pair to calculate at least one value of a modified angular velocity ( $\varpi 1L$ ) and controlling an application of torque to the second wheel based on the same.

In some examples, the method comprises controlling an amount of torque applied to one or more of the first and second wheels so as to equalise the values of the modified angular velocities of the first and second wheels ( $\varpi 1R$, $\varpi 1L$ ). The control of the application of torque to one or more of the first and second wheels is configured so as to provide differential torque that yaws the axle, i.e. in order to accommodate/adjust/correct for the effect of a yawing velocity of each respective wheel when the wheelset is undergoing a yawing motion. In some examples, where a differential torque is required, when one wheel is approaching its adhesion limit such that no torque increase can be applied thereto, a torque reduction on the other wheel is used to create the required differential torque.

FIG. 2B schematically illustrates a flow chart of a method 2000 according to a further example of the present disclosure. The component blocks of FIG. 2B are functional and the functions described may or may not be performed by a single apparatus/physical entity (such as is described with reference to the apparatus of FIG. 4).

In block 2010, a determination is made as to at least one value of an angular velocity of a first wheel about a first axis (such a first axis corresponding a horizontal axis of an axle on which the first wheel and a second wheel are mounted - the first wheel being one of a pair of wheels of a wheelset of a rail mounted vehicle). The first wheel is rotatable and motored independently of the other/second wheel of the pair of wheels.

In block 2011, a determination is made as to at least one value of an angular velocity of the second wheel of the pair of wheels of the wheel pair about the first axis.

In block 2020, a determination is made as to at least one value of a yaw velocity/yawing velocity, about a second axis perpendicular to the first axis, of the wheel pair with respect to an inertial frame of reference of the ground (or other inertial reference frame which itself has negligible angular velocity with respect to the ground around a vertical axis).

In block 2030, a calculation is made as to at least one value of a modified angular velocity of the first wheel based, at least in part, on:

the at least one value of the angular velocity of the first wheel and

the at least one value of the yawing velocity of the wheel pair.

In block 2031, a calculation is made as to at least one value of a modified angular velocity of the second wheel based, at least in part, on:

the at least one value of the angular velocity of the second wheel and

the at least one value of the yawing velocity of the wheel pair.

The calculation of the modified angular velocities of the first and second wheels may be similar to the calculation of the modified angular velocity described above with respect to the example of FIG. 2A.

In block 2040, a calculation is made as to a toque differential to be applied between the wheel pair.

In some examples, the method comprises controlling an amount of torque applied to the first and second wheels so as to apply a differential torque thereto to yaw the wheelset.

In some examples, the method comprises controlling an amount of torque applied to the first and second wheels to equalise the values of the modified angular velocities of the first and second wheels ( $\varpi 1R$, $\varpi 1L$ ). The process of equalising the modified angular velocities of the wheels of the wheelset comprises calculating a lateral displacement (error) of the wheelset from the track centre line via: the corrected wheel speeds, the rolling radius difference and a relationship between rolling radius difference and lateral displacement (and example of which is illustrated in FIG. 6). A torque differential is applied to the wheels of the wheel pair to yaw the wheelset to eliminate the lateral error.

It will be understood that each block and combinations of blocks in the flowcharts of FIG. 2A and FIG.2B can be implemented by various means, such as hardware, firmware, and/or software including one or more computer program instructions. For example, one or more of the procedures described above can be embodied by computer program instructions. In this regard, the computer program instructions which embody the procedures described above can be stored by a memory storage device and performed by a processor.

The description of a function should additionally be considered to also disclose any means suitable for performing that function. Where a structural feature has been described, it can be replaced by means for performing one or more of the functions of the structural feature whether that function or those functions are explicitly or implicitly described.

For any given longitudinal speed along tangent track, and with non-yawing axles, the angular velocities of first and second wheels of a wheel pair are inversely proportional to the rolling radii. In examples of the disclosure, the application of torque to the first and second wheels is controlled so as to effect an equalisation of the modified/corrected angular velocities for the two wheels of the wheelset, which thereby centralises the wheelset on the track. Such equalising of the corrected wheel angular velocities reduces/minimises a lateral displacement of the wheelset and hence centralises the wheelset on both straight and curved track. Advantageously, this may reduce: rail wear, creep, forced slip, rolling contact fatigue and gauge corner cracking.

There are two circumstances why an axle in a steering bogie might be yawing:

(i) in response to identifying that the wheelset is laterally displaced, a control system may correct this by applying a differential torque to the left and right motors of the left and right wheels causing the axle to yaw and steer the bogie to reduce the lateral displacement/error. Thus, a yaw velocity will be generated until the desired yaw angle is achieved.

(ii) the bogie is travelling round a curve and the axle is yawing relative to the ground, i.e. relative to the track.

Both these cases of yawing affect the individual wheel velocities as in the formula above: $\delta\omega = -\dot{\psi}w/2r$, and it is the total of the effects measured by an axle gyro (or any other means for measuring the angular yaw velocity relative to the ground) which should be used to correct the individual wheel angular velocities.

A steering yaw velocity, i.e. as per (i) above, may be as high as 30°/second and slow travel round a gentle curve, e.g. as per (ii) above, may be as low as 0.08°/second. Gyroscope modules are available which cover these extremes. Alternatively, rapid yaw velocities could be measured by a gyroscope mounted on the axle and the lower (curving) yaw velocities could be measured by a gyroscope mounted on the carbody. Or yet further alternatively, the yaw velocity could be derived from a combination of a gyroscope in the carbody and a yaw position or velocity sensor mounted between the wheelset and the bogie frame. The total yaw velocity can be measured by a gyro sensor mounted on the axle to measure angular velocity relative to the inertial frame of reference of the ground about a vertical axis, e.g. axis 106.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

The above described examples have been discussed with respect to a wheel set for a rail mounted vehicle having "cart" steering. However, it will be appreciated that examples of the disclosure are applicable to other forms/arrangements/assemblies of wheelsets and steering mechanisms. For example, other separation structures/axle assemblies for the first and second wheels of a wheel pair/wheelset, not least such as that shown in FIG. 3. The steering mechanism of FIG. 3 is somewhat similar to the way a road vehicle steers with a track rod (usually moved by a linear actuator). The separation structure/axle assembly/steering mechanism of FIG. 3 involves the wheels yawing about more than one vertical axis. Hence, an alternative correction of wheel rotation speeds/angular velocity to that of FIG. 1 is required, as discussed below.

As set out above, when there is only one yaw axis (i.e. axis 106 such as in the "cart" steering of FIG. 1), the change in wheel angular velocity $\delta\omega$ is given by:

$$\delta\omega = -\dot{\psi}w/2r$$

where:

w = distance between contact patches of a wheel pair

$\dot{\psi}$ = yaw velocity

r = wheel radius (ignoring the small error of variations in rolling radius.

In the example illustrated in FIG. 3, where there is a pair of kingpin yawing axes plus a central axis, there are two components of the correction.

Firstly, to cope with the steering by the track rod:

$$\delta\omega_w = -\dot{\psi}_w \, (h/r) \qquad (1)$$

where:

$\dot{\psi}_w$ = track rod movement induced steering angular velocity with respect to the rail mounted/bogie for the wheel pair about (second) axis 106'

h = radial distance from the contact patch of the wheel tyre on the rail to the kingpin axis.

Secondly to correct for the curving yawing:

$$\delta\omega_v = -\psi_v w/2r \qquad (2)$$

where: $\psi_v$ is the curving yaw velocity, about (third) axis 106, of the whole axle assembly/bogie with respect to the ground.

The total correction is obtained by adding the two elements $\delta\omega_w$ and in $\delta\omega_v$ of equations 1 and 2.

$$\delta\omega = \delta\omega_w + \delta\omega_v$$

In the case of the equivalent of the kingpin axes being outside the wheel (i.e. further apart than the distance between the contact patches of the wheelset), then h, measured in a similar way to that of FIG. 3, will be negative in order to achieve the proper correction to the wheel speeds.

It will be appreciated that examples of the present disclosure are applicable to various other arrangements of wheelsets, axle assemblies, mechanical arrangements, separating structures and steering mechanisms for wheel pairs with independently rotating and motored wheels (including assemblies with stub axles pivoted vertically in a variety of locations, and the Einzelrad-Einzel-Fahrwerke, "EEF", steering method adopted for trailer bogies where the wheels "steer" about a vertical axis just outside the wheel).

FIG. 4 schematically illustrates a block diagram of an apparatus 300 for performing the above method. The apparatus may include one or more components for performing the above method. It is contemplated that the functions of these components can be combined in one or more components or performed by other components of equivalent functionality.

The apparatus 300 comprising a controller 301. The controller 301 is configured to receive input data (e.g. one or more values of angular velocity and yawing velocity) from one or more input devices (e.g. sensors, gyroscopes) 308 and is configured to provide output data (e.g. one or more values of modified angular velocity) and/or output commands (e.g. to control an application of torque to the first wheel) to an output device 309 (e.g. a motor of the first wheel).

Implementation of the controller 301 can be as controller circuitry. Implementation of the controller 301 can be in hardware alone (for example processing circuitry comprising one or more processors and memory circuitry comprising one or more memory elements), have certain aspects in software including firmware alone or can be a combination of hardware and software (including firmware).

The controller can be implemented using instructions that enable hardware functionality, for example, by using executable computer program instructions in a general-purpose or special-purpose processor that can be stored on a computer readable storage medium (disk, memory etc.) or carried by a signal carrier to be performed by such a processor.

In the illustrated example, the apparatus 300 comprises a controller 301 which is provided by a processor 302 and memory 303. Although a single processor and a single memory are illustrated in other implementations there can be multiple processors and/or there can be multiple memories some or all of which can be integrated/removable and/or can provide permanent/semi-permanent/ dynamic/cached storage.

The memory 303 stores a computer program 304 comprising computer program instructions/code 305 that control the operation of the apparatus when loaded into the processor 302. The computer program instructions provide the logic and routines that enable the apparatus to perform the methods presently described.

The computer program instructions 305 are configured to cause the apparatus 300 at least to perform the method described above and with respect to FIG 2.

The processor 302 is configured to read from and write to the memory 303. The processor 302 can also comprise an input interface 306 via which data and/or commands are input to the processor 302, and an output interface 307 via which data and/or commands are output by the processor 302. The apparatus 300 therefore comprises:

at least one processor 302; and

at least one memory 303 including computer program instructions 305 the at least one memory and the computer program instructions configured to, with the at least one processor, cause the apparatus at least to perform:

determining at least one value of an angular velocity, about a first axis, of a first wheel of a wheelset of a rail mounted vehicle, wherein the wheelset comprises the first wheel and a second wheel, and wherein the first wheel is rotatable and motored independently of the second wheel;

determining at least one value of a yawing velocity of the wheelset about a second axis perpendicular to the first axis;

calculating at least one value of a modified angular velocity of the first wheel based, at least in part, on:

the at least one value of the angular velocity of the first wheel, and

the at least one value of the yawing velocity of the wheelset;

controlling an application of torque to the first wheel based, at least in part, on the at least one value of the modified angular velocity of the first wheel.

The application of torque to the first and/or second wheels may be controlled such that differing amounts of torque are applied to each wheel based, at least in part, on the at least one value of the modified angular velocity of the first wheel. Such an applied differential torque causes the axle to yaw, i.e. in order to accommodate/adjust/correct for the effect of a yawing velocity of the wheelset (of which the first wheel is a part) when the wheelset is undergoing a yawing motion.

The computer program can arrive at the apparatus 300 via any suitable delivery mechanism 311. The delivery mechanism 311 can be, for example, a non-transitory computer-readable storage medium, a computer program product, a memory device, a record medium such as a compact disc read-only memory, or digital versatile disc, or an article of manufacture that tangibly embodies the computer program 304. The delivery mechanism can be a signal configured to reliably transfer the computer program 304.

The apparatus 300 can receive, propagate or transmit the computer program 304 as a computer data signal.

In some examples, the apparatus can be embodied as a chip, chipset, module or device. As used here 'module' refers to a unit or apparatus that excludes certain parts/components that would be added by an end manufacturer or a user. The apparatus can be embodied by a computing device, not least such as a control system comprising the chip, chipset, module or device. The apparatus can be embodied in a rail mounted vehicle

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

FIG 5 schematically illustrates an example of a control system/feedback loop for controlling the application of torque. The inputs to the control system are:

a) 'raw' angular velocities ($\omega_{1R}$, $\omega_{1L}$) of the wheels of the wheelset,

b) Gyro measurements of angular velocity of the wheelset about a vertical axis ($\dot{\psi}_1$),

c) Yaw angle of axle/wheelset relative to the bogie frame ($\varphi_1$).

The 'raw' wheel angular velocities $\omega_{1R}$ and $\omega_{1L}$, i.e. the values of the same measured by the gyros, are corrected as per above to determine the corrected/modified angular velocities $\varpi_{1R}$ and $\varpi_{1L}$. The error term in the control system can be either the absolute difference in corrected velocities or the difference in the ratio of the velocities from unity. In the latter case, shown in the control scheme of FIG. 5, the error will be velocity independent.

It is to be appreciated that other control designs, different to that illustrated in FIG.5 are possible using the above described method of correcting 'raw' wheel velocities used in the control of torque applied to each wheel of a yawing axle in order to reduce/minimise lateral wheel offsets and to centralise the wheels on the rails.

Although specific terms are employed herein, they are used in a generic and descriptive sense only and not for purposes of limitation. For example, references to "gyros", "gyroscopes" and the like may relate to any means or device capable of measuring the angular velocity, e.g. a yaw velocity relative to the ground.

Features described in the preceding description can be used in combinations other than the combinations explicitly described. Although functions have been described with reference to certain features, those functions can be performable by other features whether described or not. Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims. For instance, whilst examples of the disclosure have been described with regards to use on a steering bogie, examples of the present disclosure are applicable to other types of rail mounted vehicles, not least such as a carbody.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determining" (and grammatical variants thereof) can include, not least: measuring, calculating, computing, processing, deriving, investigating, looking up (e.g., looking up in a table, a database or another data structure), ascertaining and the like. Also, "determining" can include receiving (e.g., receiving information/sensor measurement), accessing (e.g., accessing data in a memory) and the like. Also, "determining" can include resolving, selecting, choosing, establishing, and the like.

References to a variable (not least such as: values of angular velocity, values of yawing velocity and values of modified angular velocity) may be replaced by references to "data indicative of" the relevant variable.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art.

Each and every claim is incorporated as further disclosure into the specification and the claims are embodiment(s) of the present invention. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

**Claims**

1. A method (200) for controlling a wheel of a rail mounted vehicle (102), the method comprising causing actions that result in:

   determining at least one value of an angular velocity ($\omega 1R$), about a first axis (103), of a first wheel (101) of a wheelset (104) of the rail mounted vehicle (102), wherein the wheelset (104) comprises the first wheel (101) and a second wheel (105), and wherein the first wheel (101) is rotatable and motored independently of the second wheel (105);

determining at least one value of a yawing velocity ($\dot{\psi}_1$) of the wheelset (104) about a second axis (106) perpendicular to the first axis (103);

calculating at least one value of a modified angular velocity ($\varpi 1R$) of the first wheel (101) based, at least in part, on:

the at least one value of the angular velocity ($\omega 1R$) of the first wheel (101), and
the at least one value of the yawing velocity ($\dot{\psi}_1$) of the wheelset (104);

controlling an application of torque to the first wheel (101) based, at least in part, on the at least one value of the modified angular velocity ($\varpi 1R$) of the first wheel (101).

2. The method of claim 1, further comprising controlling an application of torque to the first and/or second wheels based, at least in part, on the at least one value of the modified angular velocity of the first wheel so as to apply a differing amount of torque to the first and second wheels.

3. The method of any previous claim, wherein calculating the at least one value of the modified angular velocity of the first wheel comprises determining an adjustment of the at least one value of the angular velocity of the first wheel based on the at least one value of the yawing velocity of the wheelset.

4. The method of any previous claim, wherein the first wheel and the second wheels respectively comprise a first coned tyre and a second coned tyre.

5. The method of any previous claim, wherein the first wheel and second wheels are mounted on an axle of the rail mounted vehicle, and wherein the axle is mounted to the rail mounted vehicle such that the axle is configured to be able to yaw with respect to a frame of reference of the rail mounted vehicle.

6. The method of any of the previous claims, wherein the value of the yawing velocity of the wheelset comprises a rate of change of a yawing angle of the wheelset with respect to a frame of reference of the ground.

7. The method of any of the previous claims further comprising:

determining at least one value of an angular velocity of the second wheel;
calculating at least one value of a modified angular velocity of the second wheel based at least in part on:

the at least one value of the angular velocity of the second wheel, and
the at least one value of the yawing velocity of the wheelset;

controlling an application of torque to the second wheel based, at least in part, on the at least one value of the modified angular velocity of the second wheel.

8. The method of claim 7, further comprising controlling an application of torque to the second and/or first wheels based, at least in part, on the at least one value of the modified angular velocity of the second wheel so as to apply a differing amount of torque to the second and first wheels.

9. The method of claim 7 or 8, further comprising controlling an amount of torque applied to one or more of the first and second wheels so as to equalise the values of the modified angular velocities of the first and second wheels.

10. The method of any previous claim, wherein the first and second wheels are wheels of a bogie or a carbody.

11. A data processing apparatus (300) comprising means for carrying out the method as claimed in any of the previous claims.

12. A system comprising:

the data processing apparatus of claim 11;
means for measuring an angular velocity of the first wheel;
means for measuring an angular velocity of the second wheel; and
means for measuring a yawing velocity of the wheelset.

13. The system of claim 12, further comprising:

first means for applying a torque to the first wheel, and
second means for applying a torque to the second wheel.

14. A rail mounted vehicle (102) comprising the data processing apparatus of claim 11 or the system of any of claims 12 - 13.

**15.** A computer program (304) comprising instructions which, when the program is executed by a computer, cause the computer to carry out the method as claimed in any of claims 1-10.

**Patentansprüche**

**1.** Verfahren (200) zum Steuern eines Rades eines schienengebundenen Fahrzeugs (102), wobei das Verfahren das Veranlassen von Aktionen umfasst, die resultieren in:

Bestimmen mindestens eines Wertes einer Winkelgeschwindigkeit ($\omega$1R) um eine erste Achse (103) eines ersten Rades (101) eines Radsatzes (104) des schienengebundenen Fahrzeugs (102), wobei der Radsatz (104) das erste Rad (101) und ein zweites Rad (105) umfasst, und wobei das erste Rad (101) unabhängig von dem zweiten Rad (105) drehbar und angetrieben ist;
Bestimmen mindestens eines Wertes einer Giergeschwindigkeit ($\dot{\psi}_1$) des Radsatzes (104) um eine zweite Achse (106), die senkrecht zu der ersten Achse (103) steht,
Berechnen mindestens eines Wertes einer modifizierten Winkelgeschwindigkeit ($\varpi 1R$) des ersten Rades (101), zumindest teilweise basierend auf:

dem mindestens einen Wert der Winkelgeschwindigkeit ($\omega$1R) des ersten Rades (101), und
dem mindestens einen Wert der Giergeschwindigkeit ($\psi_1$) des Radsatzes (104);

Steuern des Aufbringens eines Drehmoments auf das erste Rad (101), das zumindest teilweise auf dem mindestens einen Wert der modifizierten Winkelgeschwindigkeit ($\varpi 1R$) des ersten Rads (101) basiert.

**2.** Verfahren nach Anspruch 1, das ferner das Steuern des Aufbringens eines Drehmoments auf die ersten und/oder zweiten Räder umfasst, das zumindest teilweise auf dem mindestens einen Wert der modifizierten Winkelgeschwindigkeit des ersten Rads basiert, um ein unterschiedliches Drehmoment auf die ersten und zweiten Räder aufzubringen.

**3.** Verfahren nach einem der vorhergehenden Ansprüche, wobei das Berechnen des mindestens einen Wertes der modifizierten Winkelgeschwindigkeit des ersten Rades das Bestimmen einer Anpassung des mindestens einen Wertes der Winkelgeschwindigkeit des ersten Rades basierend auf dem mindestens einen Wert der Giergeschwindigkeit des Radsatzes umfasst.

**4.** Verfahren nach einem der vorhergehenden Ansprüche, wobei das erste Rad und die zweiten Räder jeweils einen ersten kegelförmigen Reifen und einen zweiten kegelförmigen Reifen aufweisen.

**5.** Verfahren nach einem der vorhergehenden Ansprüche, wobei das erste Rad und die zweiten Räder an einer Achse des Schienenfahrzeugs angebracht sind und wobei die Achse so an dem Schienenfahrzeug angebracht ist, dass die Achse konfiguriert ist, in Bezug auf einen Bezugsrahmen des Schienenfahrzeugs gieren zu können.

**6.** Verfahren nach einem der vorhergehenden Ansprüche, wobei der Wert der Giergeschwindigkeit des Radsatzes eine Änderungsrate eines Gierwinkels des Radsatzes in Bezug auf ein Bezugssystem des Untergrunds umfasst.

**7.** Verfahren nach einem der vorhergehenden Ansprüche ferner umfassend:

Bestimmen mindestens eines Wertes einer Winkelgeschwindigkeit des zweiten Rades;
Berechnen mindestens eines Wertes einer modifizierten Winkelgeschwindigkeit des zweiten Rades zumindest teilweise auf der basierend auf:

dem mindestens einen Wert der Winkelgeschwindigkeit des zweiten Rades, und
dem mindestens einen Wert der Giergeschwindigkeit des Radsatzes;

Steuern des Anlegens eines Drehmoments an das zweite Rad zumindest teilweise auf der Grundlage des mindestens einen Werts der modifizierten Winkelgeschwindigkeit des zweiten Rads.

**8.** Verfahren nach Anspruch 7, das ferner das Steuern des Aufbringens eines Drehmoments auf die zweiten und/oder ersten Räder umfasst, das zumindest teilweise auf dem mindestens einen Wert der modifizierten Winkelgeschwindigkeit des zweiten Rads basiert, um ein unterschiedliches Drehmoment auf die zweiten und ersten Räder aufzubringen.

**9.** Verfahren nach Anspruch 7 oder 8, das ferner die Steuerung eines Drehmoments umfasst, das auf eines oder mehrere der ersten und zweiten Räder ausgeübt wird, um die Werte der modifizierten Winkelgeschwindigkeiten der ersten und zweiten Räder auszugleichen.

**10.** Verfahren nach einem der vorhergehenden Ansprüche, wobei die ersten und zweiten Räder Räder eines Drehgestells oder eines Wagenkastens sind.

**11.** Datenverarbeitungsgerät (300) mit Mitteln zur Durchführung des Verfahrens nach einem der vorhergehenden Ansprüche.

**12.** System umfassend:

die Datenverarbeitungsvorrichtung nach Anspruch 11;
Mittel zum Messen einer Winkelgeschwindigkeit des ersten Rades;
Mittel zum Messen einer Winkelgeschwindigkeit des zweiten Rades; und
Mittel zum Messen einer Giergeschwindigkeit des Radsatzes.

**13.** System nach Anspruch 12 ferner umfassend:

eine erste Einrichtung zum Aufbringen eines Drehmoments auf das erste Rad, und
zweite Mittel zum Aufbringen eines Drehmoments auf das zweite Rad.

**14.** Schienenfahrzeug (102) umfassend die Datenverarbeitungsvorrichtung nach Anspruch 11 oder das System nach einem der Ansprüche 12 - 13.

**15.** Computerprogramm (304) mit Befehlen, die, wenn das Programm von einem Computer ausgeführt wird, den Computer veranlassen, das Verfahren nach einem der Ansprüche 1 - 10 auszuführen.

**Revendications**

**1.** Un procédé (200) de commande d'une roue d'un véhicule (102) monté sur rails, le procédé comprenant le fait de provoquer des actions qui se traduisent par :

le fait de déterminer au moins une valeur d'une vitesse angulaire ($\omega 1R$), autour d'un premier axe (103), d'une première roue (101) d'un essieu (104) du véhicule (102) monté sur rails, l'essieu (104) comprenant la première roue (101) et une deuxième roue (105), et la première roue (101) étant rotative et motorisée indépendamment de la deuxième roue (105) ;
le fait de déterminer au moins une valeur d'une vitesse de lacet ($\dot{\psi}1$) de l'essieu (104) autour d'un deuxième axe (106) perpendiculaire au premier axe (103) ;
le fait de calculer au moins une valeur d'une vitesse angulaire modifiée ( $\varpi 1R$ ) de la première roue (101) basée, au moins en partie, sur :

ladite au moins une valeur de la vitesse angulaire ($\omega 1R$) de la première roue (101), et
ladite au moins une valeur de la vitesse de lacet ($\dot{\psi}1$) de l'essieu (104) ;

le fait de commander l'application d'un couple à la première roue (101) en fonction, au moins en partie, de ladite au moins une valeur de la vitesse angulaire modifiée ( $\varpi 1R$ ) de la première roue (101).

**2.** Le procédé selon la revendication 1, comprenant en outre le fait de commander l'application d'un couple aux première et/ou deuxième roues en fonction, au moins en partie, de ladite au moins une valeur de la vitesse angulaire modifiée de la première roue de manière à appliquer une quantité de couple différente aux première et deuxième roues.

**3.** Le procédé selon l'une quelconque des revendications précédentes, dans lequel le calcul de ladite au moins une valeur de la vitesse angulaire modifiée de la première roue comprend le fait de déterminer un ajustement de ladite au moins une valeur de la vitesse angulaire de la première roue en fonction de ladite au moins une valeur de la vitesse de lacet de l'essieu.

**4.** Le procédé selon l'une quelconque des revendications précédentes, dans lequel la première roue et les deuxièmes roues comprennent respectivement un premier bandage conique et un deuxième bandage conique.

**5.** Le procédé selon l'une quelconque des revendications précédentes, dans lequel la première roue et les deuxièmes roues sont montées sur un essieu du véhicule monté sur rails, et dans lequel l'essieu est monté sur le véhicule monté sur rails de telle sorte que l'essieu est configuré de façon à être apte à effectuer un lacet avec par rapport à un référentiel du véhicule monté sur rails.

**6.** Le procédé selon l'une quelconque des revendications précédentes, dans lequel la valeur de la vitesse de lacet de l'essieu comprend un taux de variation d'un angle de lacet de l'essieu par rapport à un référentiel du sol.

**7.** Le procédé selon l'une quelconque des revendications précédentes, comprenant en outre :

le fait de déterminer au moins une valeur d'une vitesse angulaire de la deuxième roue ;
le fait de calculer au moins une valeur d'une vitesse angulaire modifiée de la deuxième roue basée au moins en partie sur :

ladite au moins une valeur de la vitesse angulaire de la deuxième roue, et

ladite au moins une valeur de la vitesse de lacet de l'essieu ;

le fait de commander l'application d'un couple à la deuxième roue en fonction, au moins en partie, de ladite au moins une valeur de la vitesse angulaire modifiée de la deuxième roue.

8. Le procédé selon la revendication 7, comprenant en outre le fait de commander l'application d'un couple aux deuxième et/ou première roues en fonction, au moins en partie, de ladite au moins une valeur de la vitesse angulaire modifiée de la deuxième roue de manière à appliquer une quantité de couple différente aux deuxième et première roues.

9. Le procédé selon la revendication 7 ou la revendication 8, comprenant en outre le fait de commander une quantité de couple appliquée à une ou plusieurs des première et deuxième roues de manière à égaliser les valeurs des vitesses angulaires modifiées des première et deuxième roues.

10. Le procédé selon l'une quelconque des revendications précédentes, dans lequel les première et deuxième roues sont des roues d'un bogie ou d'une carrosserie.

11. Un appareil (300) de traitement de données comprenant des moyens pour mettre en oeuvre le procédé selon l'une quelconque des revendications précédentes.

12. Un système comprenant :

l'appareil de traitement de données selon la revendication 11 ;
des moyens pour mesurer une vitesse angulaire de la première roue ;
des moyens pour mesurer une vitesse angulaire de la deuxième roue ; et
des moyens pour mesurer une vitesse de lacet de l'essieu.

13. Le système selon la revendication 12, comprenant en outre :

des premiers moyens pour appliquer un couple à la première roue, et
des deuxièmes moyens pour appliquer un couple à la deuxième roue.

14. Un véhicule (102) monté sur rails comprenant l'appareil de traitement de données selon la revendication 11 ou le système selon l'une quelconque des revendications 12 à 13.

15. Un programme informatique (304) comprenant des instructions qui, lorsque le programme est exécuté par un ordinateur, amènent l'ordinateur à mettre en oeuvre le procédé selon l'une quelconque des revendications 1 à 10.

FIG 1

FIG 2A

FIG 2B

FIG 3

FIG 4

FIG 5

Plot of rolling radius difference vs lateral displacement (Modified P8 wheel profile on new CEN60E2 rail)

FIG 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002234439 A
- JP 2000309270 A
- JP H08268277 A